# FASCICULE DE BREVET EUROPEEN

(11) **EP 2 042 367 B1**
(45) Date de publication et mention de la délivrance du brevet: **03.03.2010**
(21) Numéro de dépôt: 08163540.1
(22) Date de dépôt: 03.09.2008
(51) Int. Cl.: B60N 2/00, B62D 21/15, B60N 2/015, B62D 25/20, B62D 21/09

(54) **Dispositif de renfort d'un plancher de véhicule automobile pour la fixation d'un siège arrière**
Vorrichtung zur Versteifung eines Kraftfahrzeugbodens zum Befestigen eines Rücksitzes
Device for reinforcing the floor of an automobile for the attachment of a rear seat

(30) Priorité: 28.09.2007 FR 0757942
(43) Date de publication de la demande: 01.04.2009
(73) Titulaire: Peugeot Citroën Automobiles SA, 78140 Vélizy-Villacoublay (FR)
(72) Inventeur: Benane, Saïd, 94550, CHEVILLY LARUE (FR); Guilbaut, Marc, 94140, ALFORVILLE (FR)

(56) Documents cités:
- JP-A- 10 264 698
- US-A- 6 045 174

## Description

La présente invention concerne un dispositif de renfort d'un plancher de véhicule automobile destiné à la fixation d'un siège arrière, ainsi qu'un plancher de véhicule automobile équipé d'au moins un tel dispositif de renfort.

La caisse des véhicules automobiles comporte, de manière classique, un plancher formé d'un plancher avant s'étendant au-dessous de l'habitacle et d'un plancher arrière s'étendant au-dessous du coffre du véhicule.

Ces planchers, respectivement avant et arrière, se superposent au niveau d'une ligne de jonction et sont reliés entre eux par des points de soudure.

Généralement, une rangée de sièges arrière est disposée sur le plancher avant et est reliée à ce dernier par plusieurs points de fixation, au moyen d'une pièce intermédiaire formant une chape de support. Cette pièce intermédiaire est fixée sur le plancher également par des points de soudure. Cette configuration est montré dans le document US-A-6 045 174, on décrit un dispositif de renfort, suivant les caractéristiques du préambule de la revendication 1.

En cas de choc plus particulièrement frontal ou lors d'un freinage d'urgence, les objets, comme par exemple les bagages disposés dans le coffre, sont projetés vers l'avant du véhicule et viennent buter avec force contre le dossier de la rangée de sièges arrière. Ce choc provoque un effort supplémentaire sur les points de fixation de la rangée de sièges arrière, pouvant entraîner une déchirure du plancher avant au niveau de la ligne de jonction des deux planchers, respectivement avant et arrière.

A titre d'exemple, les planchers des véhicules automobiles doivent satisfaire à un test qui consiste à projeter deux bagages de 18 kilos chacun avec une décélération de 50g sur le dossier de cette rangée et cela sans qu'il se produise une déchirure. Cette prestation est difficile à tenir.

Avec une liaison au niveau de la ligne de jonction entre le plancher avant et le plancher arrière par des points de soudure, c'est à dire au niveau de deux épaisseurs, des déchirures se produisent.

Il peut donc en résulter un danger pour les passagers étant donné que l'ancrage de la rangée des sièges arrière est défaillante si bien que la sécurité des passagers n'est plus assurée.

Une solution pour remédier à ce problème consiste à réaliser au niveau de la ligne de jonction entre les planchers, respectivement avant et arrière, un cordon de soudure continu. Mais cette solution n'est pas envisageable dans la mesure où le cordon de soudure fragilise la liaison entre les deux planchers en réduisant la tenue dans le domaine élastique, ce qui peut provoquer une rupture rapide.

L'invention a donc pour objet de proposer un dispositif de renfort d'un plancher de véhicule automobile destiné à la fixation d'un siège arrière qui permet, par des moyens simples et peu onéreux, de satisfaire au test de sécurité et de supprimer les risques pour les passagers.

L'invention a donc pour objet un dispositif de renfort d'un plancher de véhicule automobile destiné à la fixation d'un siège arrière, ledit plancher comportant un plancher avant et un plancher arrière disposés dans le prolongement l'un de l'autre et déterminant entre eux une ligne de jonction, caractérisé en ce qu'il comprend au niveau de chaque point de liaison du siège arrière sur le plancher avant, une pièce supérieure de support du point de fixation correspondant du siège arrière et une pièce inférieure, placées respectivement au-dessus et au-dessous du plancher, chaque pièce supérieure (11) ou inférieure (12) liant ensemble les planchers avant (2) et arrière (3).

Selon d'autres caractéristiques de l'invention :
- lesdites pièces sont reliées entre elles et auxdits planchers par des points de liaison,
- la pièce supérieure est formée par une chape métallique ayant sensiblement la forme d'un L
- la pièce inférieure est formée par une chape métallique plane,
- les points de liaison sont formés pas des points de soudure,
- les points de soudure sont au moins au nombre de trois,
- les points de soudure comprennent au moins un point de soudure avant reliant l'extrémité avant de la pièce supérieure avec le plancher avant, au moins un point de soudure intermédiaire reliant la pièce supérieure, le plancher avant et l'extrémité avant de la pièce inférieure et au moins un point de soudure arrière reliant l'extrémité arrière de la pièce supérieure, le plancher arrière et l'extrémité arrière de la pièce inférieure,
- le bord du plancher avant ou du plancher arrière comporte entre les pièces, respectivement supérieure et inférieure, une découpe locale formant une discontinuité de la ligne de jonction (4) entre les planchers avant (2) et arrière (3), et
- chaque pièce supérieure (11) ou inférieure (12) chevauche partiellement la découpe (9).

L'invention a également pour objet un plancher de véhicule automobile, caractérisé en ce qu'il comporte au moins un dispositif de renfort tel que précédemment mentionné.

D'autres caractéristiques et avantages de l'invention apparaîtront au cours de la description qui va suivre, donnée à titre d'exemple et faite en référence aux dessins annexés, sur lesquels :
- la Fig. 1 est une vue schématique en coupe longitudinale d'un plancher de véhicule automobile équipé d'un dispositif de renfort pour la fixation d'un siège arrière, conforme à l'invention,
- la Fig. 2 est une vue schématique de dessus du plancher du véhicule automobile sans le dispositif de renfort, conforme à l'invention,
- la Fig. 3 est une vue schématique en perspective du plancher avant et de la pièce supérieure du dispositif de renfort, conforme à l'invention, et
- la Fig. 4 est une vue schématique en perspective du plancher arrière et de la pièce inférieure du dispositif de renfort, conforme à l'invention

Dans la description qui suit, les orientations utilisées sont les orientations habituelles d'un véhicule automobile et les termes "avant" et "arrière" s'entendent par rapport au sens de la marche normale du véhicule automobile.

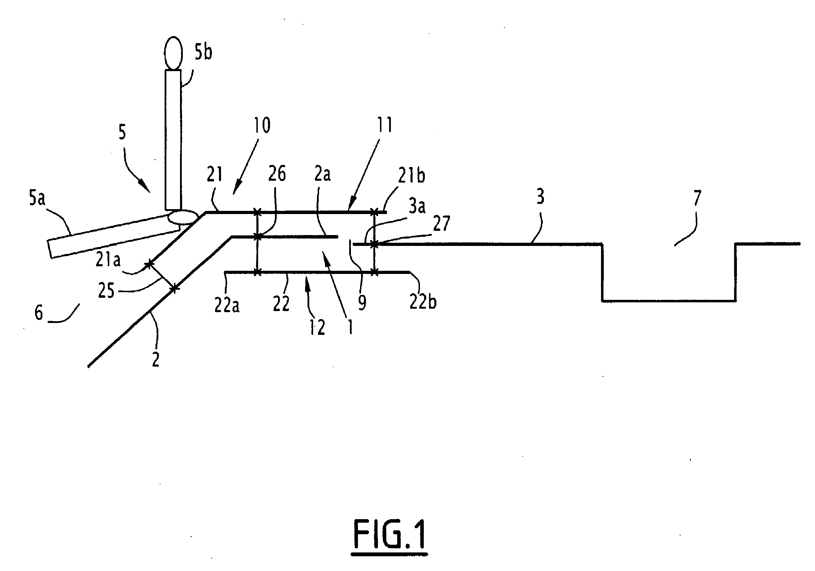

Sur la Fig. 1, on a représenté schématiquement en coupe longitudinale un plancher d'un véhicule automobile, désigné dans son ensemble par la référence 1. De manière classique, ce plancher 1 se compose de deux parties, une première partie formant un plancher avant 2 et une seconde partie formant un plancher arrière 3, ces planchers, respectivement avant 2 et arrière 3 étant disposés dans le prolongement l'un de l'autre et déterminant entre eux une ligne de jonction 4.

Le plancher avant 2 est disposé au-dessous de l'habitacle, non représenté, du véhicule et le plancher arrière 3 est disposé au-dessous du coffre, non représenté.

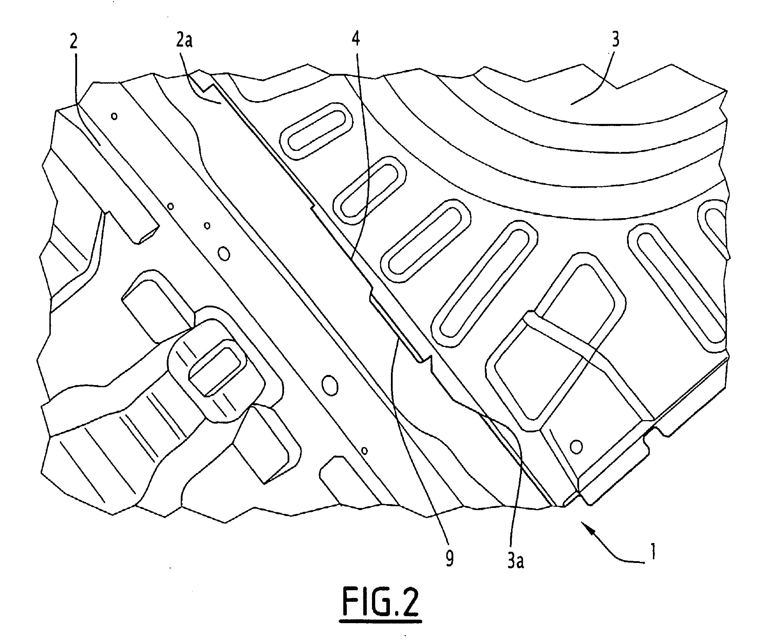

Ainsi que représenté à la Fig. 2, au niveau de la ligne de jonction 4, le bord arrière 2a du plancher avant 2 et le bord avant 3a du plancher arrière 3 se chevauchent sensiblement sur toute la largeur de ces planchers. Ces bords, respectivement arrière 2a du plancher avant 2 et avant 3a du plancher arrière 3, sont reliés ente eux par des points de soudure, non représentés.

Comme montré à la Fig. 1, le plancher avant 2 supporte un rangée de sièges arrière 5 comportant au moins une assise 5a et au moins un dossier 5b.

De manière classique, la rangée de sièges arrière 5 est déplaçable entre une position d'utilisation représentée à la Fig. 1 et une position escamotée, non représentée, dans laquelle par exemple l'assise 5a est basculée vers l'avant du véhicule et le dossier 5b est basculé dans un logement 6 ménagé dans le plancher avant 2.

Le plancher arrière 3 comporte une cuvette 7 pour le logement d'une roue de secours, non représentée.

Au niveau de chaque point de fixation du siège arrière 5 sur le plancher 2, ce plancher 2 est équipé d'un dispositif de renfort désigné par la référence générale 10.

Ce dispositif de renfort 10 comprend une pièce supérieure 11 de support du point de fixation correspondant du siège arrière 5, disposée au-dessus du plancher 1 et une pièce inférieure 12 disposée au-dessous de ce plancher 1.

Ainsi que montré à la Fig. 1, les pièces, respectivement supérieure 11 et inférieure 12, sont disposées l'une au dessus de l'autre et de part et d'autre du plancher 1 en chevauchant la ligne de jonction 4 entre le plancher avant 2 et le plancher arrière 3. Ces pièces, respectivement supérieure 11 et inférieure 12, sont reliées entre elles et audit plancher 2 et 3 par des points de liaison, comme on le verra ultérieurement.

Selon un mode de réalisation préférentiel, le bord arrière 2a du plancher avant 2 comporte entre les pièces, respectivement supérieure 11 et inférieure 12, une découpe locale 9.

Selon une variante non représentée, cette découpe locale peut être ménagée sur le bord avant 3a du plancher arrière 3.

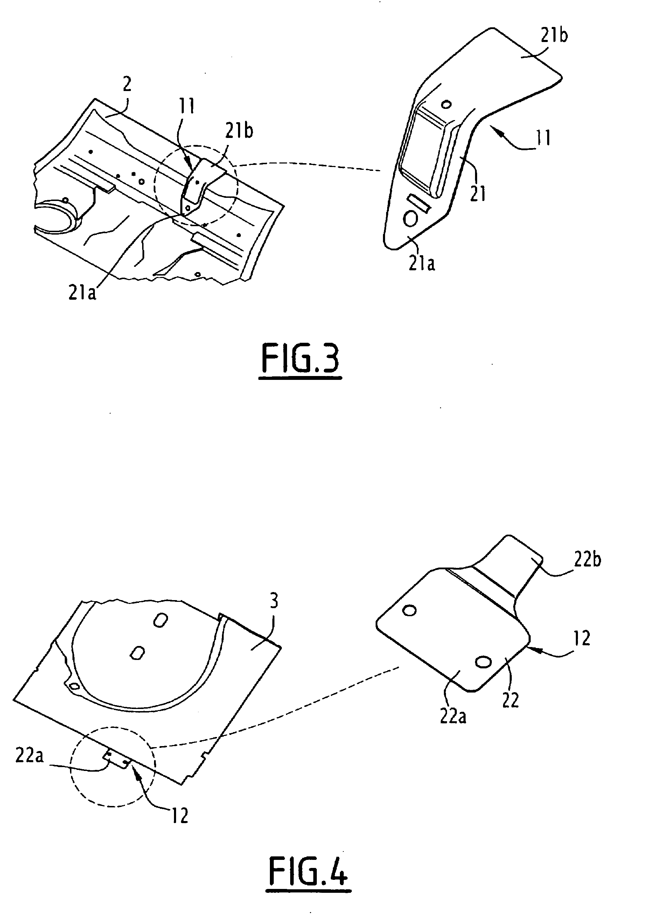

Comme montré à la Fig. 3, la pièce supérieure 11 est formée par une chape métallique 21 ayant sensiblement la forme d'un L de façon à épouser la forme du plancher avant 2. Cette chape métallique 21 comporte une extrémité avant 21 a et une extrémité arrière 21 b placée au niveau de la découpe locale 9 ménagée sur le bord arrière 2a du plancher avant 2.

Ainsi que montré à la Fig. 4, la pièce inférieure 12 disposée au-dessous du plancher 1 comporte une extrémité avant 22a placée au-dessous du plancher avant 2 et une extrémité arrière 22b disposée au-dessous du plancher arrière 3.

Les points de liaison reliant les pièces, respectivement supérieure 11 et inférieure 12, entre elles et avec les planchers, respectivement inférieur 2 et supérieur 3, sont formés par des points de soudure.

Les points de soudure comprennent :
- au moins un point de soudure avant 25 reliant l'extrémité avant 21 a de la pièce supérieure 11 avec le plancher avant 2,
- au moins un point de soudure intermédiaire 26 reliant la pièce supérieure 11, le plancher avant 2 et la pièce inférieure 12, et
- au moins un point de soudure arrière 27 reliant l'extrémité arrière 21 b de la pièce supérieure 11, le plancher arrière 3 et l'extrémité arrière 22b de la pièce inférieure 12.

Ainsi le ou les points de soudure avant 25 relient deux épaisseurs, le ou les points de soudure intermédiaires 26 et le ou les points de soudure arrière 27 relient trois épaisseurs.

Les points de soudure intermédiaires 26 et arrière 27 sur trois épaisseurs prennent respectivement toujours en sandwich le plancher 2 et le plancher 3, et cela grâce à la découpe locale 9 ménagée sur le plancher avant 2 ou sur lé plancher arrière 3 qui forme une discontinuité de la ligne de jonction 4.

La forme des pièces, respectivement supérieure 11 et inférieure 12, peut bien évidemment être différente et est fonction de la forme du plancher 1.

La forme de ces pièces est également déterminée pour leur permettre de remplir la fonction de renfort du plancher 1 et d'éviter que ce plancher se déchire lors d'un choc frontal ou d'un freinage d'urgence sous l'effet de la projection des objets disposés dans le coffre du véhicule contre les dossiers de la rangée de sièges arrière.

A titre d'exemple non limitatif, l'épaisseur des pièces, respectivement supérieure 11 et inférieure 12, est sensiblement supérieure à celle du plancher 1 et est de l'ordre de 1,47 mm contre 0,67mm pour l'épaisseur dudit plancher.

Le dispositif de renfort selon l'invention permet d'obtenir une tenue des points de soudure de l'ordre de 800 à 900 Newtons ce qui évite donc toute déchirure du plancher lors d'un choc frontal ou lors d'une décélération brutale par projection des objets contre les dossiers de la rangée de sièges arrière.

## Revendications

1. Dispositif de renfort d'un plancher (1) de véhicule automobile destiné à la fixation d'un siège arrière (5), ledit plancher (1) comportant un plancher avant (2) et un plancher arrière (3) disposés dans le prolongement l'un de l'autre et déterminant entre eux une ligne de jonction (4), **caractérisé en ce qu'**il comprend au niveau de chaque point de fixation du siège arrière (5) sur le plancher avant (2), une pièce supérieure (11) de support du point de fixation correspondant du siège arrière (5) et une pièce inférieure (12), placées respectivement au-dessus et au-dessous du plancher (1), chaque pièce supérieure (11) ou inférieure (12) liant ensemble les planchers avant (2) et arrière (3).

2. Dispositif selon la revendication 1, **caractérisé en ce que** lesdites pièces (11, 12) sont reliées entre elles et auxdits planchers (2, 3) par des points de liaison (25, 26, 27).

3. Dispositif selon la revendication 1 ou 2, **caractérisé en ce que** la pièce supérieure (11) est formée par une chape (21) métallique ayant sensiblement la forme d'un L.

4. Dispositif selon revendication 1, **caractérisé en ce que** la pièce inférieure (12) est formée par une chape (22) métallique plane.

5. Dispositif selon l'une quelconque des revendications 2 à 4 , **caractérisé en ce que** les points de liaison sont formés par des points de soudure (25, 26, 27).

6. Dispositif selon la revendication 5, **caractérisé en ce que** les points de soudure (25, 26, 27) sont au moins au nombre de trois.

7. Dispositif selon la revendication 5 ou 6, **caractérisé en ce que** les points de soudures comprennent au moins un point de soudure avant (25) reliant l'extrémité avant (21 a) de la pièce supérieure (11) avec le plancher avant (2), au moins un point de soudure intermédiaire (26) reliant la pièce supérieure (11), le plancher avant (2) et l'extrémité avant (22a) de la pièce inférieure (12) et au moins un point de soudure arrière (27) reliant l'extrémité arrière (21 b) de la pièce supérieure (11), le plancher arrière (3) et l'extrémité arrière (22b) de la pièce inférieure (12).

8. Dispositif selon l'une quelconque des revendications précédentes, **caractérisé en ce que** le bord du plancher avant (2) ou du plancher arrière (3) comporte entre lesdites pièces, respectivement supérieure (11) et inférieure (12), une découpe locale (9) formant une discontinuité de la ligne de jonction (4) entre les planchers avant (2) et arrière (3).

9. Dispositif selon la revendication 8, **caractérisé en ce que** chaque pièce supérieure (11) ou inférieure (12) chevauche partiellement la découpe (9).

10. Plancher de véhicule automobile, **caractérisé en ce qu'**il comporte au moins un dispositif de renfort (10) selon l'une quelconque des revendications précédentes.

## Claims

1. Device for reinforcing a floor (1) of a motor vehicle, intended for the attachment of a rear seat (5), the said floor (1) comprising a front floor (2) and a rear floor (3) positioned in the continuation of one another and between them delimiting a meeting line (4), **characterized in that** it comprises, at each point of attachment of the rear seat (5) to the front floor (2), an upper component (11) for supporting the corresponding attachment point of the rear seat (5) and a lower component (12), these components being positioned respectively above and below the floor (1), each upper component (11) or lower component (12) connecting the front (2) and rear (3) floors together.

2. Device according to Claim 1, **characterized in that** the said components (11, 12) are joined together and joined to the said floors (2, 3) by connecting points (25, 26, 27).

3. Device according to Claim 1 or 2, **characterized in that** the upper component (11) is formed of a substantially L-shaped metal bracket (21).

4. Device according to Claim 1, **characterized in that** the lower component (12) is formed of a flat metal bracket (22) .

5. Device according to any one of Claims 2 to 4, **characterized in that** the connecting points are formed by spot welds (25, 26, 27).

6. Device according to Claim 5, **characterized in that** there are at least three spot welds (25, 26, 27).

7. Device according to Claim 5 or 6, **characterized in that** the spot welds comprise at least one front spot weld (25) connecting the front end (21a) of the upper component (11) to the front floor (2), at least one intermediate spot weld (26) connecting the upper component (11), the front floor (2) and the front end (22a) of the lower component (12), and at least one rear spot weld (27) connecting the rear end (21b) of the upper component (11), the rear floor (3) and the rear end (22b) of the lower component (12).

8. Device according to any one of the preceding claims, **characterized in that** the edge of the front floor (2) or of the rear floor (3) comprises, between the said respectively upper (11) and lower (12) components, a local cutout (9) forming a break in the line (4) along which the front (2) and rear (3) floors meet.

9. Device according to Claim 8, **characterized in that** each upper (11) or lower (12) component partially straddles the cutout (9).

10. Motor vehicle floor, **characterized in that** it comprises at least one reinforcing device (10) according to any one of the preceding claims.

## Patentansprüche

1. Vorrichtung zur Versteifung eines Kraftfahrzeugbodens (1) zur Befestigung eines Rücksitzes (5), wobei der Boden (1) einen vorderen Boden (2) und einen Fondboden (3), die in ihrer gegenseitigen Verlängerung angeordnet sind und zwischen sich eine Verbindungslinie (4) definieren, aufweist, **dadurch gekennzeichnet, dass** sie an jedem Befestigungspunkt des Rücksitzes (5) auf dem vorderen Boden (2) ein oberes Teil (11) zur Abstützung des entsprechenden Befestigungspunkts des Rücksitzes (5) und ein unteres Teil (12), das über bzw. unter dem Boden (1) platziert ist, umfasst, wobei das obere Teil (11) oder das untere Teil (12) jeweils den vorderen Boden (2) und den Fondboden (3) miteinander verbinden.

2. Vorrichtung nach Anspruch 1, **dadurch gekennzeichnet, dass** die Teile (11, 12) durch Verbindungspunkte (25, 26, 27) miteinander und mit den Böden (2, 3) verbunden sind.

3. Vorrichtung nach Anspruch 1 oder 2, **dadurch gekennzeichnet, dass** das obere Teil (11) durch einen Metallbügel (21) gebildet wird, der im Wesentlichen L-förmig ist.

4. Vorrichtung nach Anspruch 1, **dadurch gekennzeichnet, dass** das untere Teil (12) durch einen ebenen Metallbügel (22) gebildet wird.

5. Vorrichtung nach einem der Ansprüche 2 bis 4, **dadurch gekennzeichnet, dass** die Verbindungspunkte durch Schweißpunkte (25, 26, 27) gebildet werden.

6. Vorrichtung nach Anspruch 5, **dadurch gekennzeichnet, dass** die Anzahl der Schweißpunkte (25, 26, 27) mindestens drei beträgt.

7. Vorrichtung nach Anspruch 5 oder 6, **dadurch gekennzeichnet, dass** die Schweißpunkte mindestens einen vorderen Schweißpunkt (25), der das Vorderende (21a) des oberen Teils (11) mit dem vorderen Boden (2) verbindet, mindestens einen mittleren Schweißpunkt (26), der das obere Teil (11), den vorderen Boden (2) und das Vorderende (22a) des unteren Teils (12) verbindet, und mindestens einen hinteren Schweißpunkt (27), der das hintere Ende (21b) des oberen Teils (11), den Fondboden (3) und das hintere Ende (22b) des unteren Teils (12) verbindet, umfassen.

8. Vorrichtung nach einem der vorhergehenden Ansprüche, **dadurch gekennzeichnet, dass** der Rand des vorderen Bodens (2) oder des Fondbodens (3) zwischen den Teilen, des oberen (11) bzw. des unteren (12) Teils, einen lokalen Schnitt (9) aufweist, der eine Unterbrechung der Verbindungslinie (4) zwischen dem vorderen Boden (2) und dem Fondboden (3) bildet.

9. Vorrichtung nach Anspruch 8, **dadurch gekennzeichnet, dass** jedes obere (11) oder untere (12) Teil den Schnitt (9) teilweise überlappt.

10. Kraftfahrzeugboden, **dadurch gekennzeichnet, dass** er mindestens eine Versteifungsvorrichtung (10) nach einem der vorhergehenden Ansprüche aufweist.
